# EUROPÄISCHE PATENTSCHRIFT

(11) **EP 0 823 066 B1**
(45) Veröffentlichungstag und Bekanntmachung des Hinweises auf die Patenterteilung: **08.03.2000**
(21) Anmeldenummer: 96914106.8
(22) Anmeldetag: 24.04.1996
(51) Int. Cl.: G02C 5/22

(54) **Verfahren zur Herstellung eines Federscharniers**
Method of producing a spring hinge
Procédé de production d'une charnière à ressort

(30) Priorität: 27.04.1995 DE 19515495
(43) Veröffentlichungstag der Anmeldung: 11.02.1998
(73) Patentinhaber: OBE Ohnmacht & Baumgärtner GmbH & Co. KG, 75228 Ispringen (DE)
(72) Erfinder: MÖSSNER, Heinz, D-75228 Ispringen (DE); LEHNERT, Otto, D-74889 Sinsheim (DE)
(74) Vertreter: Gleiss, Alf-Olav, Dr.jur. Dipl.-Ing.
(86) Internationale Anmeldenummer: EP9601697
(87) Internationale Veröffentlichungsnummer: WO9634308

(56) Entgegenhaltungen:
- EP-A- 0 100 754
- DE-A- 4 415 307
- DE-U- 9 000 055
- DE-U- 9 114 917
- US-A- 4 283 811
- US-A- 4 991 258

## Beschreibung

Die Erfindung betrifft ein Verfahren zur Herstellung eines Federscharniers beziehungsweise zur Montage einer Baugruppe für ein Federscharnier, wobei die Baugruppe ein Scharnierelement und ein Federelement umfaßt.

Federscharniere sind allgemein bekannt, z.B. aus US-A-4 991 258. Sie weisen ein Gehäuse auf, in das ein Federelement einbringbar ist, welches ein Verschwenken mit diesem Federscharnier verbundenen Brillenbügels über die normale Tragestellung hinaus ermöglicht und den Brillenbügel mit einer Vorspannkraft beaufschlagt, durch die der Bügel gegen den Kopf des Brillenträgers gedrückt wird. Es hat sich als nachteilig herausgestellt, daß die Herstellung des Federscharniers recht aufwendig ist. Einerseits sind die zerspanenden Herstellungsschritte aufwendig und erfordern zumeist teure profilierte Materialien.

Darüber hinaus ist der Zusammenbau des genannten Federelements, das sich vorzugsweise aus einem Scharnierelement, einem Verschlußteil und einem Federelement zusammensetzt, aufgrund der sehr geringen Abmessungen der einzelnen Teile kompliziert. Da die einzelnen Teile üblicherweise als Schüttgut vorliegen, bedarf es zunächst eines aufwendigen Ausrichtens, um die Teile für den Zusammenbau in die richtige Position zu bringen.

Die Aufgabe der Erfindung besteht deshalb darin, ein Verfahren zur Herstellung eines Federelements anzugeben, das kostengünstig realisierbar ist und die Handhabung der Einzelteile verbessert und somit zu weiteren Kostenvorteilen führt.

Diese Aufgabe wird durch die Merkmale der Patentansprüche 1 und 6 gelöst.

Durch den Einsatz von nicht-spanenden Herstellungsverfahren können darüber hinaus Gehäuse und Scharnierelemente kostengünstig gefertigt werden. Ein weiterer Vorteil ergibt sich, wenn das Gehäuse aus einem Material gleichmäßiger Dicke gefertigt wird. Dann nämlich sind die Wandstärken des Gehäuses im wesentlichen gleich, wodurch beispielsweise beim induktiven Erwärmen des Gehäuses ein Ausglühen dünnerer Bereiche vermieden wird.

Trennt man die zusammengesetzte Baugruppe nicht vom Metallstreifen, so ist eine besonders gute Handhabung möglich, die das Einsetzen in das Federscharniergehäuse erleichtert.

Die Erfindung wird im folgenden anhand der Zeichnung näher erläutert. Es zeigen:
- Figur 1: einen Längsschnitt durch ein erstes Ausführungsbeispiel eines Federscharniers;
- Figur 2: eine Draufsicht auf das in Figur 1 dargestellte Federscharnier.
- Figur 3: einen Längsschnitt durch ein in das Gehäuse gemäß Figur 1 einsetzbares Verschlußteil;
- Figur 4: eine Vorderansicht des Verschlußteils;
- Figur 5: eine Draufsicht des Verschlußteils;
- Figur 6: einen Längsschnitt durch ein zweites Ausführungsbeispiel eines Federscharniers;
- Figur 7: eine Unteransicht des in Figur 6 gezeigten Federscharniers;
- Figur 8: eine perspektivische Ansicht eines Verschlußteils;
- Figur 9: einen Längsschnitt durch ein weiteres Ausführungsbeispiel eines Federscharniers;
- Figur 10: eine Unteransicht des in Figur 9 gezeigten Federscharniers;
- Figur 11: einen Längsschnitt durch ein bei dem Federscharnier gemäß Figur 9 verwendetes Verschlußteil;
- Figur 12: eine Unteransicht des in Figur 11 dargestellten Verschlußteils;
- Figur 13: einen Längsschnitt durch ein weiteres Ausführungsbeispiel eines Federscharniers;
- Figur 14: einen Querschnitt entlang der in Figur 13 eingezeichneten Linie A-A;
- Figur 15: eine perspektivische Schemaansicht eines im Zusammenhang mit dem Federscharnier gemäß Figur 13 verwendeten Verschlußteils;
- Figur 16: eine schematische Darstellung der Herstellung eines Gehäuses;
- Figur 17: eine schematische Darstellung der Herstellung eines Scharnierelements;
- Figur 18: eine schematische Ansicht der einzelnen Schritte zur Montage einer Baugruppe, und
- Figur 19 a,b: mehrere schematisch dargestellte Scharnierelemente.

Federscharniere der hier angesprochenen Art werden zur Befestigung von Brillenbügeln an einem Mittelteil einer Brille verwendet, wobei das Federscharnier in der Regel am Bügel angebracht ist und ein Scharnierelement aufweist, welches mit einem Scharnier am Mittelteil der Brille zusammenwirkt und den Bügel gelenkig mit diesem verbindet. Der Bügel kann aus seiner Ruhestellung in eine Tragestellung verlagert und über diese hinaus aufgeklappt werden, wobei durch ein Federelement des Federscharniers eine Rückstellkraft aufgebracht wird.

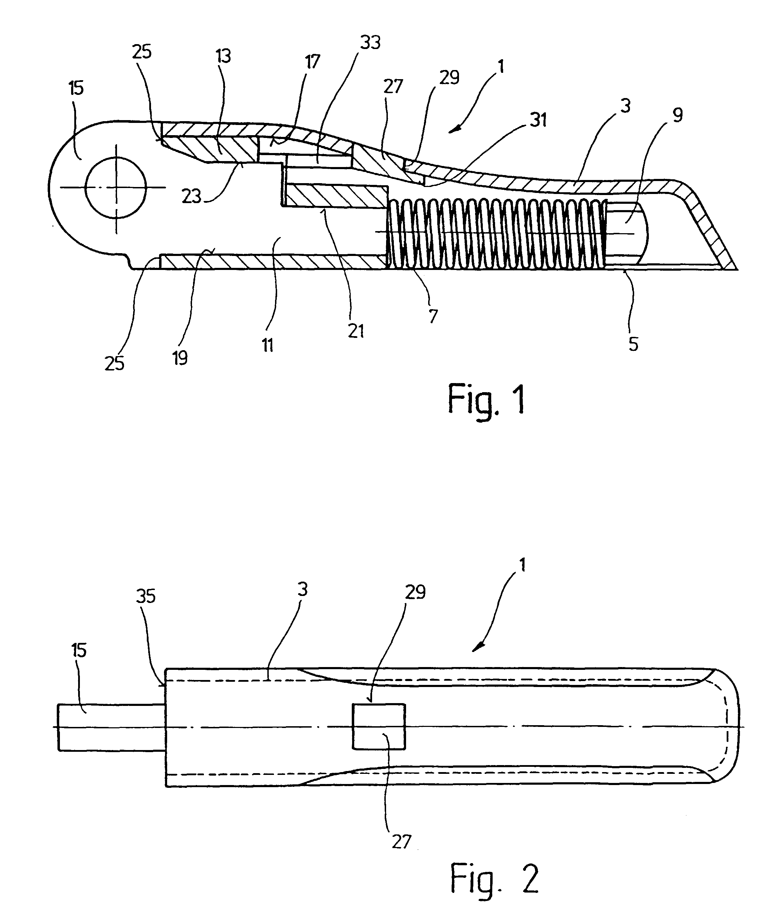

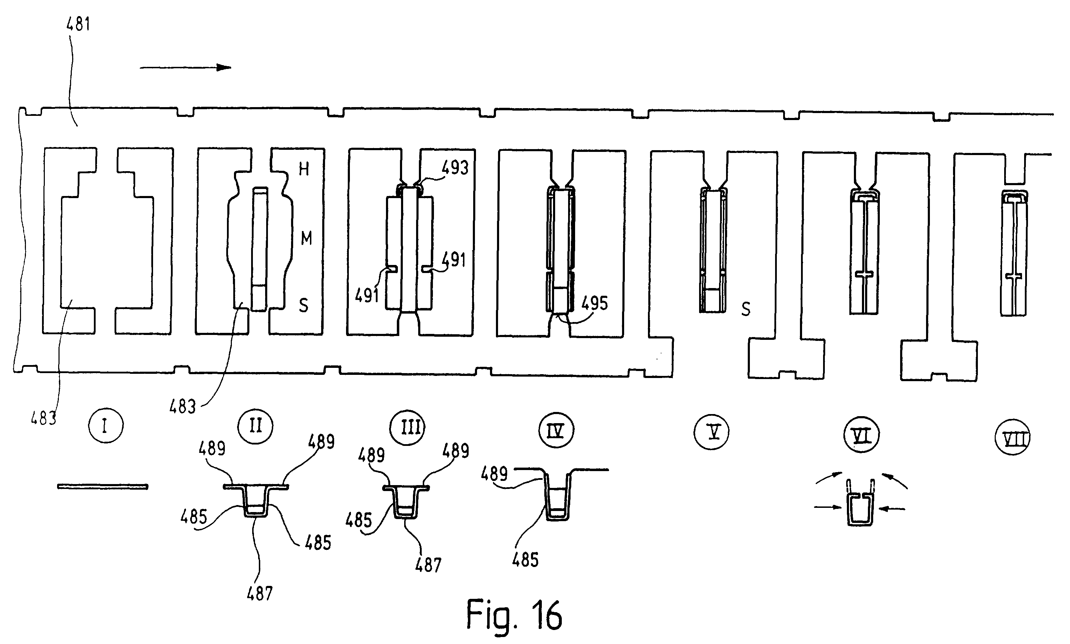

Das in Figur 1 dargestellte erste Ausführungsbeispiel eines Federscharniers 1 ist im Längsschnitt dargestellt und weist ein Gehäuse 3 auf, das durch einen Prägevorgang aus verformbarem Material, beispielsweise aus Metall, in einem Tiefzieh- beziehungsweise Prägevorgang hergestellt wurde. Eine genauere Beschreibung des Verfahrens erfolgt in Zusammenhang mit Figur 16. Das Gehäuse 3 ist auf seiner Unterseite 5 offen. In das Gehäuse 3 ist ein als Schraubenfeder ausgebildetes Federelement 7 eingebracht, das an einem langgestreckten Fortsatz 9 eines Scharnierelements 11 angebracht ist. Hier ist der Fortsatz als langgestreckter Stift ausgebildet, der durch die Schraubenfeder hindurch ragt und dessen Ende beispielsweise durch einen Quetschvorgang so verbreitert ist, daß ein Widerlager für die Schraubenfeder gebildet wird. Das gegenüberliegende Ende der Schraubenfeder beziehungsweise des Federelements 7 stützt sich an einem in das Gehäuse 3 eingebrachten Verschlußteil 13 ab, durch das das Scharnierelement 11 hindurchgeführt ist. Das Verschlußteil 13 wird gänzlich von dem Gehäuse 3 aufgenommen, während das Scharnierelement 11 ein aus der Stirnseite des Gehäuses 3 herausragendes Scharnierauge 15 aufweist, das mit einem am Mittelteil einer Brille vorgesehenen Mittelteil-Scharnier zusammenwirkt. Das Federelement 7 und das Verschlußteil 13 sind so dimensioniert, daß keines der Teile über die Unterseite 5 des Gehäuses 3 hinausragt, sondern daß vielmehr eine glatte Fläche gebildet wird, mit der das Gehäuse 3 auf der Oberfläche eines Bügels aufliegt und mit dieser fest verbunden, vorzugsweise verlötet wird.

Das Scharnierauge 15 ist einstückig mit dem übrigen Scharnierelement 11 ausgebildet. Auch der Fortsatz 9 ist Teil desselben, so daß die für die Herstellung des Federscharniers 1 erforderlichen Teile auf ein Minimum reduziert werden. Nachdem das als Schraubenfeder ausgebildete Federelement 7 auf den Fortsatz 9 aufgeschoben und dessen Ende so verbreitert wurde, daß die Feder nicht mehr ohne weiteres entfernbar ist, bilden das Federelement 7 und das Scharnierelement 11 eine Einheit.

Da das Verschlußteil 13 mit der Unterseite 5 des Gehäuses glatt abschließt, liegt auch die Unterseite des Verschlußteils 13 flächig auf der Oberfläche des Bügels auf, wenn das Gehäuse 3 dort befestigt ist. Andererseits stützt sich das Verschlußteil 13 nahe der Stirnseite des Gehäuses 3 an dessen Innenseite 17 ab. Im montierten Zustand des Federscharniers 1 ergibt sich also eine optimale Halterung des Verschlußteils 13.

Das Verschlußteil weist eine glatte Innenfläche 19 auf, an der das Scharnierelement 11 flächig anliegt. Diese Innenfläche 19 dient als erste Führungsfläche für das innerhalb des Gehäuses 3 gegen die Kraft des Federelements 7 verschieblich gelagerte Scharnierelement 11. Eine zweite Führungsfläche 21 wird dadurch gebildet, daß das Verschlußteil 13 das Scharnierelement 11 im Inneren des Gehäuses 3 zumindest bereichsweise umschließt und damit führt. Eine dritte Führungsfläche 23 wird dadurch gebildet, daß das Scharnierelement 11 an einer weiteren Innenfläche des Verschlußteils 13 anliegt.

Das Scharnierauge 15 ist so dimensioniert, daß es mit einer Anschlagschulter 25 an der Stirnseite des Gehäuses 3 anliegt. Vorzugsweise ist das Verschlußteil 13 so groß ausgebildet, daß es ebenfalls an der Anschlagfläche 25 anliegt, wenn das Scharnierelement 11 aufgrund des unter einer Vorspannung stehenden Federelements 7 gegen die Stirnseite des Gehäuses 3 gezogen wird.

Da das Scharnierelement 11 durch das Verschlußteil 13 hindurchgesteckt ist und von dem Federelement 7 mit einer Vorspannungskraft beaufschlagt wird, während das Federelement 7 durch den verbreiterten Endbereich des Fortsatzes 9 an dem Scharnierelement 11 gehalten wird, ergibt sich eine Montageeinheit, die sich aus dem Scharnierelement 11, dem Federelement 7 und dem Verschlußteil 13 zusammensetzt.

Die Montageeinheit wird nach der Befestigung, beispielsweise durch Löten oder Schweißen, des Gehäuses 3 auf einem Brillenbügel, der in Figur 1 nicht dargestellt ist, eingeschoben. Das Verschlußteil 13 weist eine federnd am Grundkörper des Verschlußteiles angelenkte Verriegelungsnase 27 auf, die bei dem hier dargestellten Ausführungsbeispiel in eine Ausnehmung 29 eingreift, die in die Wandung des Gehäuses 3 eingebracht und in dessen Oberseite angeordnet ist. Durch ein geeignetes Widerlager 31 wird verhindert, daß die Verriegelungsnase zu weit aus dem Gehäuse 3 herausgedrückt wird und letztlich die Ausnehmung 29 vollflächig ausfüllt, ohne die Oberfläche des Gehäuses 3 zu überragen.

Grundsätzlich ist es denkbar, daß die Ausnehmung 29 lediglich eine Vertiefung in der Wandung des Gehäuses 3 bildet und daß die Verriegelungsnase 27 in dieser einrastet und damit dem Verriegelungsteil 13 im Inneren des Gehäuses 3 Halt gibt. Bei dem hier dargestellten Ausführungsbeispiel durchbricht die Ausnehmung 29 die Wandung des Gehäuses 3 vollständig, so daß die Verriegelungsnase 27 von außen erreichbar ist und in ihre Entriegelungsstellung gedrängt werden kann. Die Verriegelungsnase 27 ist über einen Federarm 33 mit dem Grundkörper des Verschlußteils 13 verbunden.

Aus der Draufsicht gemäß Figur 2 ist erkennbar, daß das Scharnierauge 15 die Stirnseite 35 des Gehäuses 3 überragt und schmaler als dieses ausgebildet ist. Die Darstellung läßt auch die Ausnehmung 29 erkennen, die hier lediglich beispielhaft viereckig ausgebildet ist und die Verriegelungsnase 27 aufnimmt. Die Dimensionen der Ausnehmung und der Verriegelungsnase 27 sind so aufeinander abgestimmt, daß das Innere des Gehäuses 3 durch die Verriegelungsnase 27 gegen das Eindringen von Schmutz geschützt ist. Entsprechend ist auch das Verschlußteil 13 so dimensioniert, daß die Stirnseite 35 des Gehäuses 3 gegen das Eindringen von Schmutz geschützt ist.

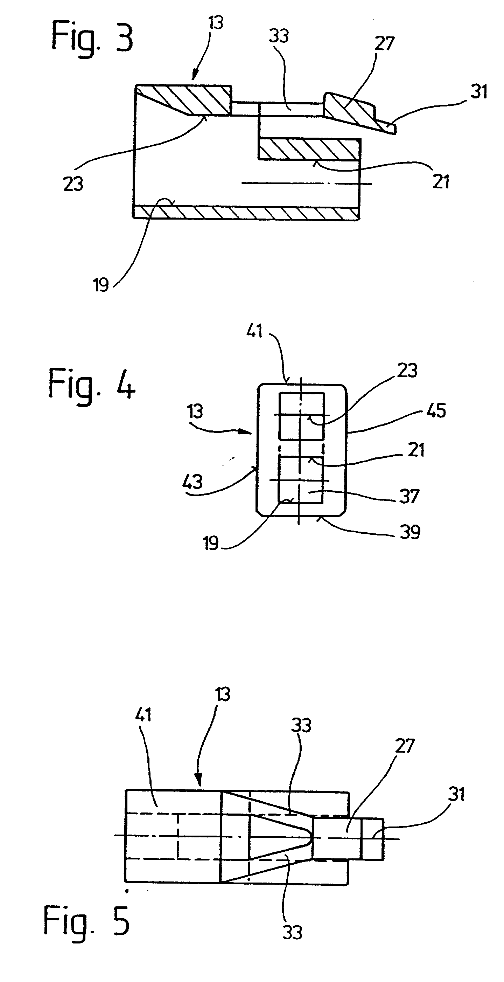

Figur 3 zeigt das Verschlußteil 13 in demontiertem Zustand. Deutlich ist die Innenfläche 19 zu erkennen, die als erste Führungsfläche für das Scharnierelement 11 dient. Darüber hinaus sind die zweite Führungsfläche 21 und die dritte Führungsfläche 23 erkennbar, die mit der ersten Führungsfläche so zusammenwirken, daß das Scharnierelement 11 praktisch spielfrei im Inneren des Verschlußteils 13 geführt ist. Dadurch ergibt sich eine optimale Führung des Scharnierelements 11 im Inneren des Gehäuses 3.

Figur 3 gibt auch den anhand von Figur 1 erläuterten Federarm 33, die Verriegelungsnase 27 und das Widerlager 31 wieder.

Die Innenabmessungen des Verschlußteils 13 sind nach dem oben Gesagten so auf die Abmessungen des Scharnierelements 11 abgestimmt, daß dieses praktisch spielfrei geführt ist.

Die in Figur 4 dargestellte Vorderansicht des Verschlußteils 13 läßt erkennen, daß zwischen der zweiten Führungsfläche 21 und der Innenfläche 19 ein praktisch quadratischer Durchbruch 37 gegeben ist, der von dem -vorzugsweise in diesem Bereich ebenfalls quadratisch ausgebildeten- Scharnierelement 11 durchdrungen wird. Figur 4 läßt auch die dritte Führungsfläche 23 erkennen. Darüber hinaus zeigt Figur 4 eine Stirnfläche 38, die auch als Lauffläche bezeichnet wird. Deren genaue Funktion wird später noch beschrieben.

Die Ausgestaltung des Verschlußteils 13 wird an die Innenform des Gehäuses 3 angepaßt, so daß -im montierten Zustand des Federscharniers 1- das Verschlußteil 13 mit seiner Unterseite 39 auf der Oberfläche des dargestellten Brillenbügels aufliegt, dabei mit seiner Oberseite 41 an der Innenseite 17 des Gehäuses 3 anliegt, während die Seitenflächen 43 und 45 vorzugsweise an den Seitenwänden des Gehäuses 3 anliegen. Das Verschlußteil 13 wird also im montierten Zustand des Federscharniers 1 von dem Gehäuse 3 praktisch spielfrei festgehalten.

Aus Figur 4 ist erkennbar, daß also das Verschlußteil 13 das Scharnierelement 11 von allen Seiten umschließt, so daß die oben angesprochene Montageeinheit ausgebildet wird.

Die in Figur 5 gezeigte Draufsicht auf die Oberseite 41 des Verschlußteils 13 läßt erkennen, daß die Breite der Verriegelungsnase 27 geringer sein kann als die des Verschlußteils 13. Der die Verriegelungsnase 27 haltende Federarm 33 kann als durchgehende Materialbrücke ausgebildet sein. Es reicht jedoch, wenn wenigstens ein schmaler Federarm vorgesehen ist, oder wie bei dem hier dargestellten Ausführungsbeispiel, zwei im wesentlichen V-förmige Federarme 33 die Verriegelungsnase 27 elastisch federnd mit dem Grundkörper des Verschlußteils 13 verbinden.

Die Verriegelungsnase 27, die gemäß Figur 1 beziehungsweise 3 eine als Anlaufschräge ausgebildete Oberfläche aufweist, bildet quasi einen Schnappverschluß, mit dem die Montageeinheit aus Federelement 7, Scharnierelement 11 und Verschlußteil 13 sicher im Inneren des Gehäuses 3 gehalten wird. Die Verriegelungsnase 27 wird aufgrund der Federwirkung der Federarme 33 in der Ausnehmung 29 gehalten.

Das Scharnierelement 11 ebenso wie das Verschlußteil 13 werden vorzugsweise aus Metall, insbesondere nickelfreiem Metall, vorzugsweise Titan hergestellt, damit einerseits allergische Reaktionen des Brillenträgers vermieden und andererseits Verschleißerscheinungen auf ein Minimum reduziert werden.

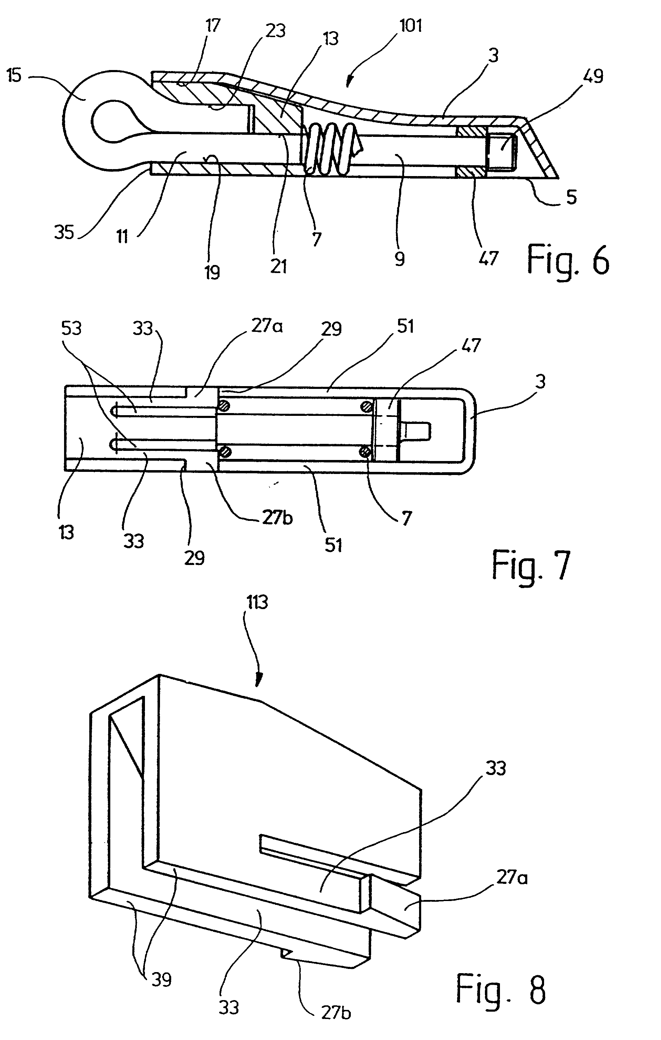

Figur 6 zeigt ein weiteres Ausführungsbeispiel eines Federscharniers 101 im Längsschnitt. Es ist auch hier ein Gehäuse 3 erkennbar, das ein Verschlußteil 13 aufnimmt, das von einem Scharnierelement 11 durchdrungen wird und das mit einem Fortsatz 9 ein Federelement 7 durchdringt, das auch hier als Schraubenfeder ausgebildet ist. Die Schraubenfeder stützt sich einerseits an dem Verschlußteil 13 andererseits an einem Anlagering 47 ab, der auf den Fortsatz 9 geschoben ist und durch eine beispielsweise durch Quetschung erzeugte Verbreiterung des Fortsatzes 9 gehalten wird. Das Federelement 7 ist unter Vorspannung auf den Fortsatz aufgebracht, so daß das Scharnierelement 11 so in das Verschlußteil 13 hereingezogen wird, daß das Scharnierauge 15 gegen die Stirnseite 35 des Gehäuses 3 beziehungsweise des Verschlußteils 13 gezogen wird.

Das Gehäuse 3 ist so ausgebildet, daß dessen Unterseite 5 weder von dem Federelement 7 noch von dem Verschlußteil 13 überragt wird. Wird also das Gehäuse 3 auf einen Brillenbügel aufgebracht, beispielsweise aufgelötet, liegt das Verschlußteil 13 mit seiner Unterseite bündig auf der Oberseite des Bügels an. Andererseits liegt das Verschlußteil 13 mit seiner Oberseite an der Innenseite 17 des Gehäuses 3 an, so daß im montierten Zustand des Federscharniers 101 das Verschlußteil 13 sicher im Inneren des Gehäuses 3 gehalten wird und eine Führung für das Scharnierelement 11 bildet. Dieses liegt einerseits an der Innenfläche 19 des Verschlußteils 13 an, die eine erste Führungsfläche bildet, andererseits an einer zweiten Führungsfläche 21, die nahe dem Anlagebereich des Federelements 7 entspringt und sich in Richtung zur Stirnseite 35 erstreckt. Nahe der Stirnseite findet sich eine dritte Führungsfläche 23, die, wie die erste Führungsfläche 21, der Innenfläche 19 gegenüberliegend angeordnet ist. Der Abstand der dritten Führungsfläche 23 ist größer als der der ersten Führungsfläche 21, da das Scharnierelement 11 in diesem Bereich höher ist.

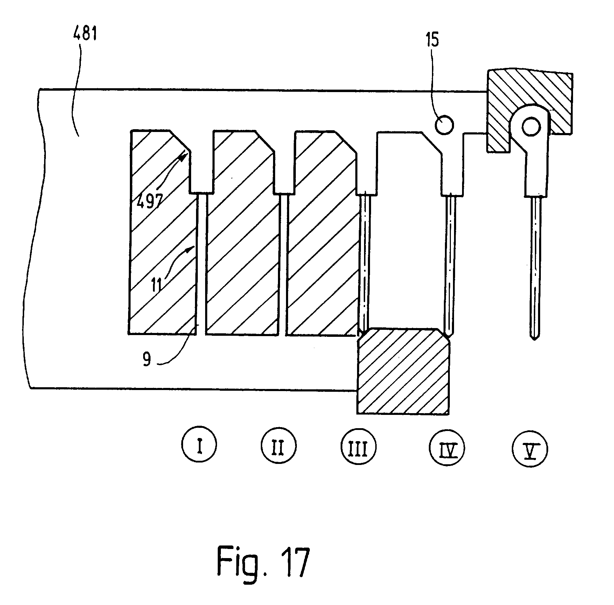

Vorzugsweise ist das Scharnierelement 11 als Biegeteil hergestellt, nämlich aus einem den Fortsatz 9 bildenden langgestreckten Drahtteil, der im Bereich des Scharnierauges eine Öse bildet und in das Innere des Verschlußteils 13 zurückgeführt ist, um an der dritten Führungsfläche 23 anzuliegen. Das hier dargestellte Scharnierelement 11 ist besonders preiswert realisierbar. Eine weitere Herstellungsweise des Scharnierelements 11 wird mit Bezug auf Figur 17 erläutert.

Aus der Unteransicht gemäß Figur 7 ist erkennbar, daß der Anlagering 47 an den Innenflächen des Gehäuses 3 eines Federscharniers 101 anliegt und damit sicher geführt ist. Die Seitenwände des Verschlußteils 13 liegen ihrerseits an den inneren Flanken des Gehäuses 3 an, so daß auch hier eine sichere Führung des Verschlußteils 13 im Gehäuse 3 gegeben ist.

Das Verschlußteil 13 weist hier zwei Verriegelungsnasen 27a und 27b auf, die elastisch federnd an Federarmen 33 angebracht und mit dem Grundkörper des Verschlußteils 13 verbunden sind. Die Verriegelungsnasen 27a und 27b greifen in Ausnehmungen 29 des Gehäuses 3 an, die hier in dessen Seitenwände eingebracht sind. Grundsätzlich reichen auch hier Vertiefungen aus, in die die Verriegelungsnasen 27a und 27b eingreifen. Bei dem hier dargestellten Ausführungsbeispiel durchbrechen die Ausnehmungen 29 die Seitenwände 21. Die Außenflächen der Verriegelungsnasen 27a und 27b schließen flächig mit der Außenseite des Gehäuses 3 ab, so daß die optischen Eigenschaften des Federscharniers 101 in keiner Weise beeinträchtigt werden und die Verriegelungsnasen für eine mögliche Demontage des Verschlußteils 13 zugänglich bleiben. Die Verriegelungsnasen 27a und 27b greifen als Schnappverschlüsse in die Ausnehmungen 29 ein. Zur Unterstützung der Verriegelungskräfte der Federarme 33 wirkt das Federelement 7 auch auf die Innenseiten der Verriegelungsnasen 27a und 27b, so daß diese nach außen in die Ausnehmungen 29 gedrängt werden. Bei einer Überdehnung des Brillenbügels wird das Scharnierelement 11, das in Längsrichtung des Gehäuses 3 gegen die Kraft des Federelements verschieblich gelagert ist, aus dem Inneren des Gehäuses 3 herausgezogen und das Federelement 7 komprimiert. Dadurch erhöhen sich die in Richtung der Verriegelungsstellung der Verriegelungsnasen 27a und 27b wirkenden Federkräfte, so daß bei einer Belastung des Federscharniers 101 die Verankerung des Verschlußteils 13 im Inneren des Gehäuses 3 sicher gewährleistet ist.

Bei dem Ausführungsbeispiel gemäß Figur 7 ist die Unterseite des Verriegelungsteils 13 praktisch geschlossen. Es sind lediglich zwei Schlitze 53 vorgesehen, durch die die Federarme 33 gebildet werden, die die Verriegelungsnasen 27 mit dem übrigen Verschlußteil 13 verbinden.

In Figur 8 ist eine leichte Abwandlung des Verschlußteils 113 dargestellt. Es zeichnet sich dadurch aus, daß die Unterseite offen ist. Hier wird das in Figur 8 nicht dargestellte Scharnierelement 11 einerseits durch die aus Figur 6 ersichtliche zweite Führungsfläche 21 und die dritte Führungsfläche 23 und andererseits durch die Oberfläche eines Brillenbügels geführt, auf den das Federelement 111 mit einem Verschlußteil 113 aufgebracht wird.

Die perspektivische Unteransicht des Verschlußteils 113 läßt besonders gut die Ausgestaltung der Verriegelungsnasen 27a und 27b erkennen, deren Außenfläche etwa keilförmig ausgebildet ist, so daß der angesprochene Schnappverschluß entsteht, während die Verriegelungsnasen von den Federarmen 33 nach außen gedrängt werden.

Die Unterseite 39 des Verschlußteils 113 ist eben ausgebildet, so daß diese flächig auf der Oberfläche eines Brillenbügels aufliegt und eine optimale Führung des Scharnierelements 11 bilden kann.

Die anhand der Figuren 1 und 6 erläuterten Federscharniere stimmen nach allem also insofern überein, als nach Aufbringung des Gehäuses 3 auf die Oberfläche eines Brillenbügels die eingebrachte Montageeinheit aus Scharnierelement, Federelement und Verschlußteil jederzeit wieder demontierbar ist, weil die Verriegelungsnasen der Verschlußteile von außen auch im montierten Zustand zugänglich bleiben.

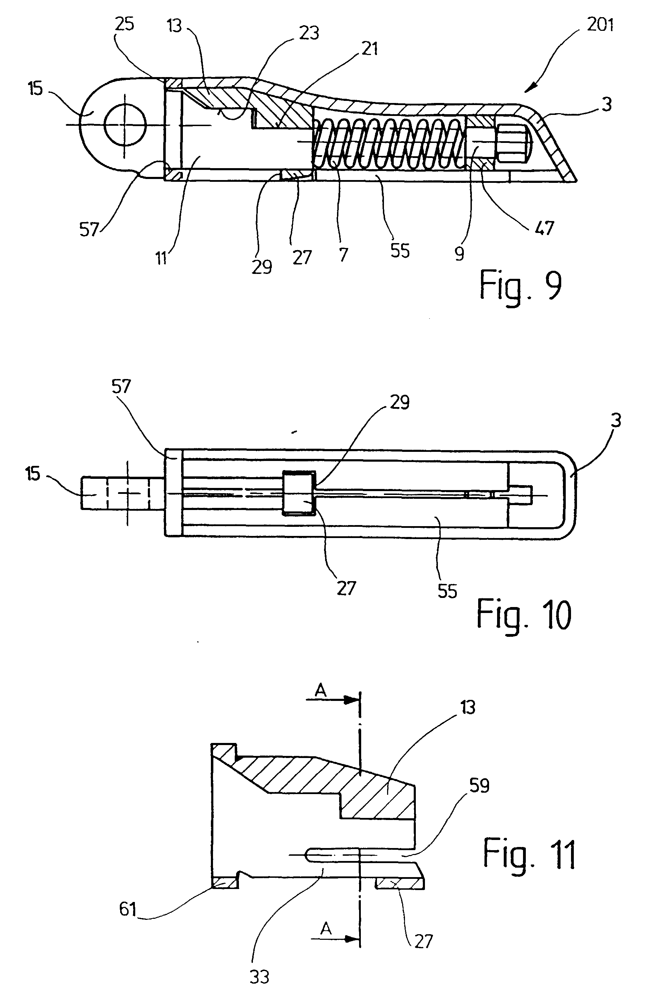

Figur 9 zeigt ein weiteres Ausführungsbeispiel eines Federscharniers 201, das wiederum ein Gehäuse 3, ein in das Gehäuse eingebrachtes Federelement 7 sowie ein ebenfalls im Inneren des Gehäuses 3 angeordnetes Scharnierelement 11 umfaßt, das einerseits einen Fortsatz 9 und andererseits ein einstückig mit diesem verbundenes Scharnierauge 15 umfaßt. Das Scharnierelement verläuft auch hier im Inneren eines Verschlußteils 13, welches das Scharnierelement 11 zumindest U-förmig umgreift.

Das Gehäuse 3 ist, wie aus Figur 10 ersichtlich, anders als die oben beschriebenen Gehäuse, mit einem Boden 55 versehen, der die in das Innere des Gehäuses eingebrachte Montageeinheit aus Federelement 7, Scharnierelement 11 und Verschlußteil 13 umschließt.

Das Verschlußteil 13 ist auch hier mit einer Verriegelungsnase 27 versehen, die in eine Ausnehmung 29 im Gehäuse 3 eingreift. Hier ist allerdings die Ausnehmung 29 in den Boden 55 eingebracht, so daß die Verriegelungsnase 27 nach dem Aufbringen des Federscharniers 201 auf einen Brillenbügel nicht mehr zugänglich ist. Das Innere des Gehäuses 3 ist damit besser gegen Staub und sonstige Verschmutzungen, die auch bei einem Lötvorgang anfallen können, geschützt.

Das Federelement 7 ist hier wiederum durch einen Anlagering 47 auf dem Fortsatz 9 gesichert, der durch eine Endverformung des Fortsatzes 9 gegen Abrutschen gesichert ist.

Das Scharnierelement 11 liegt mit seiner Unterseite flächig auf der Innenseite des Bodens 55 auf, der damit eine erste Führungsfläche bildet. Eine zweite Führungsfläche 21 ist nahe dem Federelement 27 ausgebildet, eine dritte Führungsfläche 23 in der Nähe der Stirnseite des Gehäuses 3. Damit ist das Scharnierelement 11, wie bei den übrigen Ausführungsbeispielen, durch das Verschlußteil 13 sicher geführt, dessen Inneres so auf die Dimensionen des Scharnierelements 11 abgestimmt ist, daß auch eine optimale seitliche Führung gewährleistet ist.

Zwischen die Stirnseite des Gehäuses 3 und das Scharnierauge 15, das wiederum eine Anschlagfläche 25 ausbildet, kann hier eine Verschlußplatte 57 vorgesehen sein, die das Eindringen von Verschmutzungen an der Stirnseite des Gehäuses verhindert.

Aus der Unteransicht gemäß Figur 10 ist ersichtlich, daß das Scharnierelement 11 schmaler ist als das Gehäuse 3. Deutlich erkennbar ist auch die die Wandung des Gehäuses 3 vollkommen durchdringende Ausnehmung 29, die die Verriegelungsnase 27 rundum umschließt.

Figur 11 zeigt das Verschlußteil 13 im Längsschnitt. Deutlich ist hier der Federarm 33 erkennbar, über den die Verriegelungsnase 27 mit dem Grundkörper des Verschlußteils verbunden ist. Der Federarm ist durch einen Seitenwandbereich des Riegelungsteils gebildet, der durch einen Schlitz 59 abgetrennt ist. Die Darstellung läßt erkennen, daß das Verschlußteil 13 mit einem umlaufenden Wulst 61 versehen sein kann, der für einen Abschluß der Stirnseite des Gehäuses 3 dient und gegebenenfalls die Verschlußplatte 57, die in Figur 9 dargestellt ist, ersetzen kann. Bei einer derartigen Ausgestaltung bildet das Verschlußteil 13 eine Anlagefläche an der Unterseite des Scharnierelements 11 aus und führt dieses besonders gut.

Der Federarm 33 kann an seinem rechten Ende mit einer Anlaufschräge 63 versehen sein, gegen die das Federelement 7 so wirkt, daß die Verriegelungsnase 27 mit einer zusätzlichen, hier nach unten wirkenden Vorspannkraft beaufschlagt wird, die also die Verriegelungsnase 27 in ihre Verriegelungsstellung drängt. Wird durch eine achsiale Bewegung des Scharnierelements 11 -in Figur 9 nach links- das Federelement 7 mit einer erhöhten Vorspannkraft beaufschlagt, bewirkt dies eine Verbesserung der Verankerung der Verriegelungsnase 27 in der zugehörigen Ausnehmung 9 im Gehäuse 3.

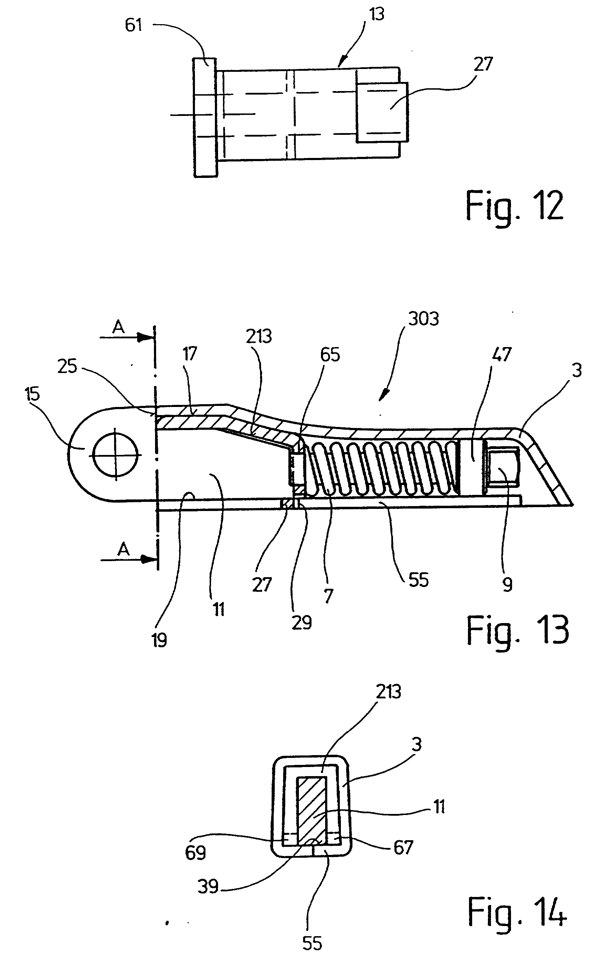

Die Unteransicht in Figur 12 des Verriegelungselements 13 zeigt, daß die Breite der Verriegelungsnase 27 geringer sein kann, als die des übrigen Verschlußteils 13. Dagegen überragt der Wulst 61 die seitlichen Begrenzungslinien des Verschlußteils 13, so daß ein Abschluß der Stirnseite des Gehäuses 3 gebildet wird, wobei sich dadurch die Lauffläche 38 vergrößert auf die Querschnittfläche des Gehäuses an dessen Stirnseite.

Bei den zweiten und dritten Ausführungsbeispielen des Federscharniers ist das Gehäuse ebenfalls aus einem verformbaren, vorzugsweise tiefziehfähigen Material hergestellt. Die Verschlußteile und die Scharnierelemente können aus Kunststoff hergestellt sein. Vorzugsweise werden jedoch nickelfreie Metallteile verwendet, wie beispielsweise Titan.

Figur 13 zeigt schließlich ein viertes Ausführungsbeispiel eines Federscharniers 303, das wiederum ein Gehäuse 3 mit einem Boden 55 umfaßt. Im Inneren des Gehäuses befindet sich ein Federelement 7, beispielsweise eine Schraubenfeder, die über einen Fortsatz 9 eines Scharnierelements 11 hinweggeschoben ist und durch einen Anlagering 47 und eine endständige Verbreiterung des Fortsatzes gehalten wird. Der Anlagering 47 bildet eine erste Anlagefläche, ein Verschlußteil 213 eine zweite Anlagefläche.

Das Verschlußteil 13 umfaßt außer dem Fortsatz 9 ein Scharnierauge 15, das aus dem Gehäuse 3 herausragt und dessen Abmessungen so gewählt sind, daß eine Anschlagfläche 25 ausgebildet wird, die an der Stirnseite des Gehäuses 3 anliegt. Das Federelement 7 steht unter einer Vorspannung, so daß das Scharnierauge 15 gegen die Stirnseite des Gehäuses 3 gepreßt wird.

Der Boden 55 des Gehäuses 3 weist eine Ausnehmung 29 auf, die hier als Durchbrechung ausgebildet ist. In diese greift eine Verriegelungsnase 27 des Verschlußteils 213, das als gebogenes Blechteil realisiert ist. Es dient als Führung für das in horizontaler Richtung gegen die Kraft des Federelements 7 verschieblichen Scharnierelements 11 und weist eine Durchbrechung 65 auf, deren Seitenwandungen so auf die Kontur des Fortsatzes 9 abgestimmt sind, daß hier eine Führungsfläche für das Scharnierelement 11 gebildet wird.

Das Verschlußteil 213 liegt mit seiner Oberseite flächig an der Innenseite 17 des Gehäuses 3 und andererseits am Boden 55 an, so daß eine optimale Halterung des Verschlußteils 213 gewährleistet ist.

Figur 14 zeigt einen Querschnitt entlang der in Figur 13 eingezeichneten Linie A-A, aus der ersichtlich ist, daß das Verschlußteil 213 mit seiner Außenfläche rundum an der Innenfläche des Gehäuses 3 anliegt, also sicher gehalten wird. Auf der unteren, dem Boden 55 zugewandten Seite des Scharnierelements 11 erstrecken sich zwei Seitenarme 67 und 69 des Verschlußteils 13, deren diesem zugewandten Innenflächen als Führungsflächen für das Scharnierelement 11 dienen. Die Unterseite 39 des Verschlußteils 213 liegt flächig auf dem Boden 55 des Gehäuses 3 an, so daß auch hier eine Führung des Scharnierelements 11 gegeben ist.

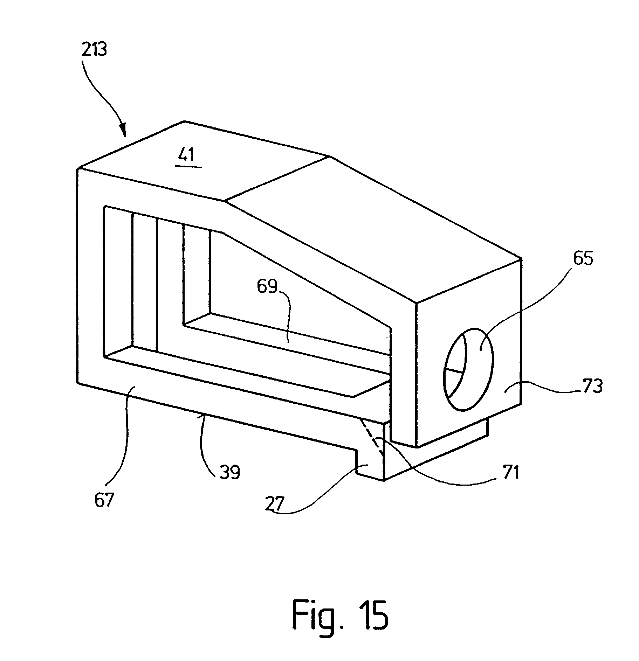

Figur 15 zeigt schließlich eine Prinzipskizze des in Figur 13 und 14 dargestellten Verschlußteils 213. Deutlich sind die Seitenarme 67 und 69 erkennbar, deren einander zugewandten Innenflächen an der Außenseite des Scharnierelements 11 anliegen und Führungsflächen bilden. Diese Darstellung zeigt auch die Durchbrechung 65, durch die der Fortsatz 9 hindurch ragt, und deren Innenfläche Führungsfläche für diesen Fortsatz ist.

Die Seitenarme 67 und 69 dienen als Federarme für die Verriegelungsnase 27, durch die das Verschlußteil 213 nach dem Einschieben in das Gehäuse 3 sicher gehalten wird.

Wie bei den oben dargestellten Ausführungsbeispielen umfaßt das Scharnierelement 11 sowohl das Scharnierauge 15 als auch den Fortsatz 9, auf dem das Federelement 7 angebracht ist. Da das Scharnierelement 11 bei allen Ausführungsbeispielen das jeweilige Verschlußteil durchdringt, bilden das Federelement, das Scharnierelement und das Verschlußteil eine Montageeinheit, die leicht in das Gehäuse 3 einbringbar ist.

Bei den Ausführungsbeispielen, bei denen das Gehäuse 3 mit einem Boden 55 versehen ist, kann die Montageeinheit vor der Anbringung des Gehäuses an einem Brillenbügel endgültig in das Gehäuse 3 eingebracht werden, so daß das Federelement eine vormontierte Baugruppe bildet. Das Gehäuse 3 kann dann auf geeignete Weise an einem Brillenbügel befestigt werden, wobei aufgrund der Federeigenschaften des Federelements 3 Klebeverfahren bevorzugt werden. Bei einer Löt- oder Schweißverbindung zwischen dem Gehäuse und einem Brillenbügel wird die Montageeinheit vorzugsweise nachträglich in das Gehäuse eingebracht. Dadurch läßt sich verhindern, daß das Verschlußteil der Löt- beziehungsweise Schweißhitze ausgesetzt wird, die die Festigkeit der Lauffläche des Verschlußteils negativ beeinflussen würden.

Im Übergangsbereich zwischen den Seitenarmen 67 und 69 und der Verriegelungsnase 27 kann bei dem Ausführungsbeispiel des Verschlußteils 213 in Figur 15 eine, hier gestrichelt dargestellte, Anlaufschräge 71 vorgesehen sein. Wird der dem Federelement 7 zugewandte Arm 73 des Verschlußteils 213 mit einer Federkraft beaufschlagt, so wird dieser gegen die Anlaufschräge 71 gedrängt, so daß die Verriegelungsnase 27 ihrerseits nach unten, also in ihre Verriegelungsstellung gedrückt wird. Verstärkt sich also die Vorspannungskraft des Federelements 7 beim Überdrücken des Brillenbügels, wird die Verriegelungswirkung der Verriegelungsnase 27 mittels der Anlaufschräge 71 verstärkt.

Das anhand der Figuren 13 bis 15 erläuterte Ausführungsbeispiel des Federscharniers 303 zeichnet sich durch ein besonders preiswert herstellbares Verschlußteil 213 aus, das sicher im Inneren des Gehäuses 3 gehalten wird, wobei die Oberseite 41 des Verschlußteils 213 sicher an der Innenseite 17 des Gehäuses 3 anliegt, während die Unterseite 39 der Seitenarme 67 und 69 flächig an der als erste Führungsfläche dienenden Innenseite des Gehäuses 3 (siehe Figur 13) anliegt. Da das Verschlußteil 213 sicher im Gehäuse 3 gehalten wird, kann eine optimale Führung des Scharnierelements 11 gewährleistet werden, auch wenn das Verschlußteil 213 aus einem Blechteil geformt ist und daher sehr preiswert hergestellt werden kann.

Wird die aus dem Federelement, dem Scharnierelement und dem Verschlußteil bestehende Montageeinheit in ein Gehäuse mit Boden eingebracht und ist in dem Boden eine Ausnehmung für eine Verriegelungsnase des Verschlußteils vorgesehen, kann die Montageeinheit nach dem Aufbringen des Gehäuses auf einen Brillenbügel nicht mehr entfernt werden, da die Verriegelungsnasen von außen nicht mehr zugänglich sind. Wird das Federscharnier als vormontierte Baugruppe verwendet und als Ganzes auf einen Brillenbügel aufgebracht, bleibt vor der Montage des Federscharniers die Verriegelungsnase zugänglich, so daß dann auch ein Ausbau der Montageeinheit aus dem Gehäuse noch möglich ist.

In allen Fällen ist gewährleistet, daß bei einem einfachen Aufbau des Federscharniers eine vorgefertigte Montageeinheit in ein auf einem Brillenbügel aufgebrachtes Gehäuse einbringbar ist, wobei das Verschlußteil der Montageeinheit einerseits einen sicheren Halt im Inneren des Gehäuses ergibt und andererseits eine optimale Führung des Scharnierelements gewährleistet. Darüber hinaus bietet das Verschlußteil eine Lauffläche, deren Materialeigenschaften optimal sind und durch Ausglühen beim Löten oder Schweißen nicht beeinträchtigt wurden.

In allen Fällen kann ein einfach herzustellendes Prägeteil als Gehäuse verwendet werden, so daß das Federscharnier kostengünstig herstellbar ist. Da das Verschlußteil zumindest von drei Seiten von dem Gehäuse umschlossen wird, während die vierte Seite von der Oberfläche des Brillenbügels abgeschlossen ist, können Verschmutzungen aber auch Lacke oder Poliermittel nicht in das Innere des Federscharniers gelangen, so daß eine sehr hohe Funktionstüchtigkeit sichergestellt ist. Da die Stirnseite des Gehäuses also durch das Verschlußteil praktisch dicht abgeschlossen ist und da das Gehäuse im übrigen flächig auf dem Bügel aufliegt, wird ein gegen Verschmutzungen gesichertes Federscharnier bereitgestellt, ohne daß es eines besonders großen Konstruktionsaufwandes bedürfte. Auch die Ausgestaltung des Verschlußteils als Führung für das Scharnierelement vereinfacht den Konstruktionsaufwand für das Federelement und senkt die Herstellungskosten.

Figur 16 zeigt beispielhaft in sieben Stufen die Herstellung eines Gehäuses. Als Ausgangsmaterial dient ein Metallband 481, das vorzugsweise aus nikkelfreiem Metall, wie beispielsweise Titan besteht. Die Dicke des Metallbandes 481 entspricht dabei der gewünschten maximalen Wandstärke des herzustellenden Gehäuses.

In der ersten Stufe I wird zunächst eine Fläche 483 freigeschnitten beziehungsweise freigestanzt, die etwas größer gewählt ist als die Fläche des "aufgeklappten" Gehäuses.

In Schritt II wird zur Herstellung der Seitenwände 485 des Gehäuses ein mittlerer Bereich der Fläche 483 geprägt beziehungsweise formgezogen. Somit entsteht ein im Querschnitt U-förmiges Teil aus Seitenwänden 485 und Gehäuseoberseite 487. Die beiden nicht gezogenen seitlichen Bereiche der Fläche 483 werden als Flügel 489 bezeichnet. Dadurch, daß die Gehäuseoberseite 487 vom stirnseitigen Ende S zum gegenüberliegenden Ende H abfallen soll (vergleiche Figur 1), sind die Seitenwände 485 im Bereich S höher als im mittleren und hinteren Bereich M beziehungsweise H. Entsprechend sind auch die Flügel 489 im Bereich M breiter als im vorderen Bereich S.

Die ungleichmäßige Kontur der Flügel 489 wird im Schritt III begradigt. Gleichzeitig werden Einkerbungen 491 spiegelsymmetrisch zur Längsachse des Gehäuses in die Flügel 489 eingebracht. Sowohl das Begradigen als auch das Einbringen der Einkerbungen 491 erfolgt vorzugsweise durch Stanzen. Im Schritt III werden darüber hinaus die beiden Flügel 489 im hinteren Bereich H nach oben geklappt, so daß saubere Übergänge von der hinteren Gehäusewand 493 zu den Gehäuseseitenwänden entstehen.

Im nächsten Schritt IV werden die beiden Flügel 489 über die gesamte Länge des Gehäuses nach oben geklappt, so daß sie jeweils in einer Ebene mit einer Seitenwand 485 liegen.

Im Schritt V wird das stirnseitige Ende S vom Metallband beziehungsweise -streifen 481 freigeschnitten, so daß das Gehäuse nur noch an der hinteren Gehäusewand 493 mit dem Metallstreifen 481 verbunden ist. Dadurch, daß nicht an einer stirnseitigen Prägekante 495 sondern weiter innenliegend geschnitten wird, entsteht an der Stirnseite S eine Öffnung zum Gehäuseinneren.

In diese Öffnung wird in Schritt VI ein Biegedorn eingeführt, der ein definiertes Ausrichten der Seitenwände 485 und ein Einklappen der Flügel 489 erlaubt. Die Pfeile P deuten dabei an, daß nicht nur die Flügel 489 sondern auch die Seitenwände 485 mit einer Druckkraft beaufschlagt werden. Die nach Innen eingeklappten Flügel 489 bilden somit den Boden des Gehäuses, wobei die beiden Einkerbungen 491 zusammen die zur Aufnahme der Verriegelungsnase des Verschlußteils vorgesehene Ausnehmung bilden.

Im letzten Bearbeitungsschritt VII muß dann nur noch die Verbindung zwischen Metallstreifen 481 und hinterer Gehäusewand 493 durchtrennt werden, um das fertige Gehäuse zu erhalten.

Figur 17 zeigt beispielhaft die Herstellung des Scharnierelements 11, wie es in den vorhergehenden Figuren 1 bis 13 gezeigt ist.

Wie bei der Herstellung des Gehäuses, ist auch hier ein bandförmiges Material 481 Ausgangspunkt der Herstellung. Vorzugsweise kommen nickelfreie Metalle, wie beispielsweise Titan zum Einsatz.

Zunächst wird die Grundform des Scharnierelements in einem ersten Schritt I freigeschnitten. Dabei entsteht die Grundform des Fortsatzes 9 und zumindest ein Teil des sich an den Fortsatz 9 anschließenden, später das Scharnierauge aufweisenden Bereichs 497. Das Scharnierelement 11 ist also mit diesem Bereich 497 und dem gegenüberliegenden Ende des Fortsatzes 9 am Metallstreifen 481 befestigt.

Selbstverständlich kann der schraffierte freigeschnittene Bereich auch zu einer Metallstreifenkante hin erweitert werden, so daß das freigeschnittene Scharnierelement 11 nur noch einseitig mit dem Metallstreifen 481 verbunden ist.

Im Verfahrensschritt II erhält der Fortsatz 9 die gewünschte Rundung, indem beispielsweise zwei halbkreisförmige Prägewerkzeuge entsprechend zusammenwirken.

Im Verfahrensschritt III wird der zwischen zwei benachbarten Fortsätzen 9 bestehende Metallstreifenbereich abgetrennt, beispielsweise mittels eines Stanzwerkzeugs.

Im Verfahrensschritt IV wird die Verbindung zwischen Fortsatz 9 und Metallstreifen 481 vollständig aufgetrennt. Gleichzeitig wird in den Bereich 497 das Scharnierauge 15, vorzugsweise durch Stanzen eingebracht.

Die Formgebung des das Scharnierauge 15 aufweisenden Bereichs 497 und das Abtrennen des Scharnierelements 11 vom Metallstreifen 481 erfolgt im Verfahrensschritt V, wobei auch hier vorzugsweise ein Stanzwerkzeug zum Einsatz kommt.

Auch das in der Beschreibung erwähnte Verschlußteil 13 kann in ähnlicher Weise wie das Gehäuse und das Scharnierelement aus einem Metallband gefertigt werden, wobei vorzugsweise Stanz- und Präge- beziehungsweise Biegetechniken eingesetzt werden. Auch hier werden vorzugsweise nickelfreie Metalle, beispielsweise Titan verwendet.

Aus den beiden Figuren 16 und 17 wird deutlich, daß die Herstellung der genannten Teile sehr einfach und damit äußerst kostengünstig durchführbar ist. Teure Profile, aus denen Gehäuse oder Scharnierelemente ausgeschnitten werden, sind hinfällig. Auch die anschließende zerspanende Bearbeitung dieser ausgeschnittenen Profilteile kann mit dem vorgenannten Herstellungsverfahren entfallen.

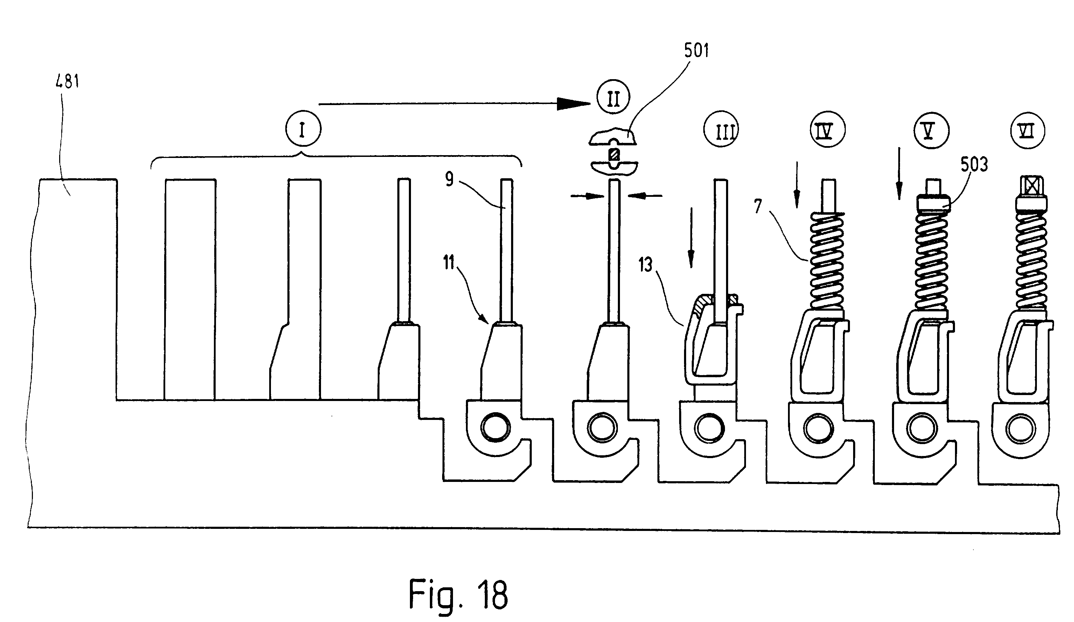

Figur 18 zeigt schematisch in sechs Schritten die Montage einer Baugruppe für ein Federscharnier. Diese Baugruppe umfaßt im wesentlichen das Scharnierelement 11, das Verschlußteil 13 und das Federelement 7, wie sie in Zusammenhang mit den Figuren 1 bis 17 bereits ausführlich beschrieben sind.

In den Schritten I und II wird aus einem Metallband 481 das Scharnierelement 11 gefertigt, wie dies im wesentlichen im Zusammenhang mit Figur 17 ausführlich beschrieben wurde.

Die Darstellung in Schritt II verdeutlicht nochmals, daß der zunächst im Querschnitt rechteckförmige Fortsatz 9 mit Hilfe eines Prägewerkzeugs 101 eine runde Kontur erhält.

Im nächsten Schritt III wird das Verschlußteil 13 auf das Scharnierelement 11 aufgeschoben. Im anschließenden Schritt IV wird das Federelement 7 aufgeschoben und mittels einer danach aufgesteckten Hülse 503 (V) gesichert, wobei im Schritt VI das Ende des Fortsatzes 9 gequetscht wird, so daß die Hülse 503 gesichert ist. Die durch die Quetschung entstehende ebene Fläche ist durch ein "X" angedeutet.

Die Baugruppe ist nun zusammengesetzt und kann, wie in Figur 18 dargestellt, vom Metallstreifen 481 abgetrennt werden.

Selbstverständlich kann die genannte Baugruppe auch weiterhin am Metallstreifen 481 befestigt bleiben, so daß eine bessere Handhabung im Vergleich zu Schüttgut möglich ist.

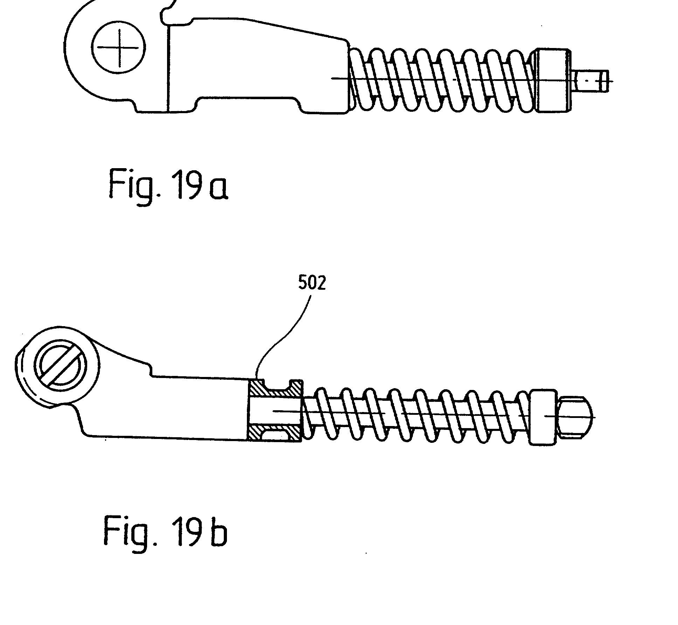

Das zuvor beschriebene Verfahren kann auch dann eingesetzt werden, wenn eine Baugruppe benötigt wird, die lediglich aus einem Scharnierelement 11 und einem Federelement 7 besteht. In diesem Fall kann auf den in Figur 18 gezeigten Schritt III verzichtet werden. Dies ist in Figur 19 a dargestellt.

Anstelle des Verschlußteils kann darüber hinaus auch ein Sperring 502 eingesetzt werden, der beispielsweise mittels einer Sickung eine Verriegelung ermöglicht. Dies ist in Figur 19 b gezeigt.

Das anhand der Figuren 1 bis 15 erläuterte Federscharnier zeichnet sich darüber hinaus dadurch aus, daß das Scharnierelement, das mit dem Federelement und dem Verschlußteil eine Montageeinheit bildet, als Ganzes leicht in das Gehäuse eingesetzt und sicher verankert werden kann, da das Verschlußteil als Schnappverschluß ausgebildet ist. Mit dem Einführen der Montageeinheit rastet das Verschlußteil verriegelnd in das Gehäuse ein, ohne daß es irgendwelcher weiterer Befestigungsmaßnahmen bedürfte, die die Montage des Federscharniers aufwendiger machen würde.

Trotz der einfachen Montage wird eine sehr exakte Führung des Scharnierelements erreicht, da dieses durch das Verschlußteil allseitig geführt wird. Auch bei dem Ausführungsbeispiel des Verschlußteils, das in Figur 8 dargestellt ist, ist eine allseitige Führung des Scharnierelements dadurch erreicht, daß das Verschlußteil das Scharnierelement U-förmig umgreift und dieses flächig an die Oberfläche des Bügels heranführt, an dem das Federscharnier befestigt ist. Letztlich bewirkt also auch hier das Verschlußteil eine allseitige Führung des Scharnierelements.

Die besondere Ausgestaltung des Verschlußteils bewirkt eine besonders gute Führung: Für die Länge L, die Höhe H und die Breite B dieses Teils gilt die folgende Maßvorgabe: L > H > B. Durch diese Dimensionierung wird einerseits eine sichere Verankerung des Verschlußteils in dem montierten Gehäuse gewährleistet; es stellt sich also ein spielfreier Sitz des Verschlußteils im fertigen Federscharnier ein. Andererseits ergibt gerade diese sichere Verankerung des Verschlußteils im Federscharnier eine sehr gute Führung des Scharnierelements, welches spielfrei im Inneren des Verschlußteils geführt ist.

Obwohl also das Federscharnier ein sehr preisgünstig herstellbares Prägegehäuse aufweist, in das die Montageeinheit nur eingeklipst zu werden braucht, ergeben sich hervorragende technische Eigenschaften, die ansonsten nur mit einem sehr viel höheren Fertigungsaufwand erreichbar sind.

Die kostengünstige Herstellungsmöglichkeit für das Federscharnier stellt sich auch deshalb ein, weil aufgrund der besonderen Ausgestaltung des Verschlußteils auf spezielle Führungseinrichtungen im Federscharnier verzichtet werden kann, auch entfallen sonst übliche Verriegelungselemente, die das Scharnierelement im Inneren des Gehäuses halten beziehungsweise sichern.

## Patentansprüche

1. Verfahren zur Herstellung eines Federscharniers, wobei das Federscharnier zumindest ein Gehäuse, ein Scharnierelement und ein Federelement umfaßt, **dadurch gekennzeichnet,** daß das Scharnierelement (11) aus einem bandförmigen Material in folgenden Schritten hergestellt wird:
- Freischneiden eines im wesentlichen der Kontur des Scharnierelements (11) entsprechenden Bereichs;
- Einprägen einer Rundung zur Ausbildung eines Fortsatzes (9) des Scharnierelements (11);
- Ausstanzen eines Scharnierauges (15) und
- Abtrennen des Scharnierelements (11) vom Metallband.

2. Verfahren nach Anspruch 1, **dadurch gekennzeichnet**, daß das Federelement (7) zur Bildung einer Baugruppe auf das Scharnierelement (11) aufgebracht wird, solange das Scharnierelement (11) mit dem bandförmigen Material verbunden ist.

3. Verfahren nach Anspruch 1 oder 2, **dadurch gekennzeichnet,** daß die Baugruppe zusätzlich ein Verschlußteil (13) oder einen Sperring (503) umfaßt, und daß das Verschlußteil oder der Sperring vor dem Federelement (7) auf das Scharnierelement (11) aufgebracht wird.

4. Verfahren nach einem der Ansprüche 2 oder 3, **dadurch gekennzeichnet,** daß das Scharnierelement (11) vom bandförmigen Material (481) abgetrennt wird, wenn die Baugruppe vollständig montiert ist.

5. Verfahren nach einem der Ansprüche 2, 3 oder 4, **dadurch gekennzeichnet,** daß die Baugruppe in das Gehäuse eingebracht wird.

6. Verfahren zur Herstellung eines Federscharniers, das zumindest ein Gehäuse, ein Scharnierelement und ein Federelement umfaßt, **dadurch gekennzeichnet,** daß das Gehäuse (3) aus einem bandförmigen Material in folgenden Schritten hergestellt wird:
- Freischneiden eines Bereichs (483) aus dem bandförmigen Material;
- Formziehen dieses Bereichs zur Ausbildung von Seitenwänden des Gehäuses;
- Begradigung der Seitenkanten des Bereichs (483);
- Einklappen eines seitlichen Streifens des Bereichs (483) zur Ausbildung eines Gehäusebodens;
- Abtrennen des Gehäuses (3) vom bandförmigen Material.

7. Verfahren nach Anspruch 6, **dadurch gekennzeichnet,** daß das Gehäuse (3) aus einem bandförmigen Material gleichmäßiger Dicke hergestellt wird.

## Claims

1. A method of producing a spring hinge, wherein the spring hinge comprises at least a casing, a hinge element and a spring element, **characterized in that** the hinge element (11) is produced from a material in strip form in the following steps:
- cutting free an area substantially corresponding to the outline of the hinge element (11);
- impressing a rounded portion in order to form an extension (9) to the hinge element (11);
- stamping out a hinge lug (15), and
- separating the hinge element (11) from the metallic strip.

2. A method according to Claim 1, **characterized in that** the spring element (7) is attached to the hinge element (11) in order to form a sub-assembly, as long as the hinge element (11) is connected to the material in strip form.

3. A method according to Claim 1 or 2, **characterized in that** the sub-assembly additionally comprises a closure part (13) or a locking ring (503), and the closure part or the locking ring is attached to the hinge element (11) in front of the spring element (7).

4. A method according to one of Claims 2 or 3, **characterized in that** the hinge element (11) is separated from the material in strip form (481) when the sub-assembly is completely assembled.

5. A method according to one of Claims 2, 3 or 4, **characterized in that** the sub-assembly is inserted into the casing.

6. A method of producing a spring hinge, which comprises at least a casing, a hinge element and a spring element, **characterized in that** the casing (3) is produced from a material in strip form in the following steps:
- cutting free an area (483) from the material in strip form;
- moulding the said area in order to form lateral walls of the casing;
- straightening the lateral edges of the area (483);
- folding in a lateral strip of the area (483) in order to form a base of the casing, and
- separating the casing (3) from the material in strip form.

7. A method according to Claim 6, **characterized in that** the casing (3) is produced from a material in strip form of uniform thickness.

## Revendications

1. Procédé pour la fabrication d'une charnière à ressort, la charnière à ressort comprenant au moins un boîtier, un élément de charnière et un élément à ressort, **caractérisé en ce que** l'élément de charnière (11) est fabriqué dans un matériau en forme de bande selon les étapes suivantes :
- dégagement par coupe d'une partie correspondant essentiellement au contour de l'élément de charnière (11);
- empreinte d'un arrondi pour la formation d'un prolongement (9) de l'élément de charnière (11);
- découpe d'un oeil de charnière (15) et
- séparation de l'élément de charnière (11 ) de la bande métallique.

2. Procédé selon la revendication 1, **caractérisé en ce que** l'élément à ressort (7) est appliqué sur l'élément de charnière (11) pour la formation d'un ensemble, tant que l'élément de charnière (11) est relié au matériau en forme de bande.

3. Procédé selon la revendication 1 ou 2, **caractérisé en ce que** l'ensemble comprend en outre une pièce de fermeture (13) ou un anneau de blocage (503), et en ce que la pièce de fermeture ou l'anneau de blocage est appliqué sur l'élément de charnière (11) avant l'élément à ressort (7).

4. Procédé selon l'une des revendications 2 ou 3, **caractérisé en ce que** l'élément de charnière (11) est séparé du matériau en forme de bande (481) lorsque l'ensemble est entièrement assemblé.

5. Procédé selon l'une des revendications 2, 3 ou 4, **caractérisé en ce que** l'ensemble est inséré dans le boîtier.

6. Procédé pour la fabrication d'une charnière à ressort qui comprend au moins un boîtier, un élément de charnière et un élément à ressort, **caractérisé en ce que** le boîtier (3) est fabriqué dans un matériau en forme de bande selon les étapes suivantes :
- dégagement par coupe d'une partie (483) du matériau en forme de bande ;
- mise en forme de cette partie pour la formation de parois latérales du boîtier ;
- rectification des arêtes latérales de la partie (483) ;
- pliage d'une bande latérale de la partie (483) pour la formation d'un fond de boîtier ;
- séparation du boîtier (3) du matériau en forme de bande.

7. Procédé selon la revendication 6, **caractérisé en ce que** le boîtier (3) est fabriqué dans un matériau en forme de bande d'épaisseur régulière.
